# EUROPEAN PATENT SPECIFICATION

(11) **EP 2 274 194 B1**
(45) Date of publication and mention of the grant of the patent: **22.04.2015**
(21) Application number: 08751082.2
(22) Date of filing: 13.05.2008
(51) Int. Cl.: B62D 33/06, B62D 33/10, F16F 1/16

(54) **SUSPENSION SYSTEM FOR ANTI-ROLL BAR**
AUFHÄNGUNGSSYSTEM FÜR EINEN STABILISATOR
SYSTÈME DE SUSPENSION POUR BARRE ANTIROULIS

(43) Date of publication of application: 19.01.2011
(73) Proprietor: Kongsberg Automotive AS, 3601 Kongsberg (NO)
(72) Inventor: BJOERKHAUG, Lasse, N-3612 Kongsberg (NO); BJOERKGARD, Sven, N-3610 Kongsberg (NO); SKIAKER, Simen, N-3612 Kongsberg (NO)
(74) Representative: UEXKÜLL & STOLBERG
(86) International application number: PCT/IB2008/001407
(87) International publication number: WO 2009/138809

(56) References cited:
- EP-A1- 0 204 047
- WO-A1-00/09351
- WO-A1-99/25213
- WO-A1-2006/110050
- WO-A1-2006/110050
- DE-A1- 4 342 809
- DE-A1- 10 037 890
- US-A- 2 898 797

## Description

The present invention relates to a suspension system for attaching a driver's cabin frame to a frame of a vehicle and a method for mounting the same, wherein the system comprises an anti-roll bar including a torsion bar, a bushing and means for connecting the bushing to said torsion bar, wherein said means include a bolt to be inserted through said bushing and inner securing means arranged to receive a first end portion of the bolt.

Heavy vehicles, e.g. trucks, often have a driver's cabin which is spring-mounted to the vehicle's frame at three or four different points. The rear edge of the cabin may be suspended, for example, by an air spring arrangement of a known kind. The front edge of the cabin of such vehicles is often provided with an anti-roll bar whose purpose is to damp out the various kinds of bumping movements which may occur at the various suspension points. Especially, heeling movements of the driver's cabin during cornering of the vehicle is reduced by the anti-roll bar suspension.

A forward anti-roll bar usually comprises a one-piece transverse torsion bar which has at each of its axial ends a link arm directed in the longitudinal direction of the vehicle. Each link arm is directly or indirectly supported by the cabin at one end and by the frame of the vehicle at the other end. A vertical movement of the spring-mounted driver's cabin is therefore transferred to a rotational movement of the torsion bar.

Such a suspension system is already known from WO 2006/110050. The suspension system described therein is directed to the problem that in traditional versions of anti-roll bars it is necessary to dismantle the whole anti-roll bar if, for example, the radiator of a truck needs to be removed for cleaning, or if it is necessary to replace the anti-roll bar's bearing units. This will require the use of a transverse crane for suspension of the driver's cabin. This is an extremely cumbersome and expensive solution. In the light of this, a need has arisen for anti-roll bars which are designed with modular solutions. It should therefore be possible to dismantle parts of the anti roll bar such as the torsion bar or the bearings without the need to remove the whole anti-roll bar from the vehicle.

In WO 2006/110050 this problem is solved by providing an anti-roll bar and a method of dismantling and mounting the same, wherein each arm of the anti-roll bar is fixed to the torsion bar by means of at least one attachment device which is positioned in a through-going passage in each arm, the attachment device's end portion being housed in a bore in the torsion bar. The attachment device is preferably a bolt that is inserted through a bushing and screwed into a coaxial threaded bore at an axial end in the torsion bar or at a portion of the link arm it is connected to.

It is disadvantageous about the known solution that the torsion bar can not rotate independently from the bolt and the bushing because the bolt is fixed to the torsion bar. As the weight of the driver's cabin weighs at least partially on the bushing a free rotation of the torsion bar relative to the bolt and the bushing would be advantageous regarding the frictional resistance, wear, stability and flexibility of the system.

The most common way of mounting a bushing to an anti-roll bar is to use an ordinary bolt and nut solution with a nut at each end of the bolt in order to secure the bolt in the bushing from both sides against movements along the longitudinal axis of the bolt. For this purpose, a bolt is inserted through the bushing and fastened by a nut on each side. In case of a bearing that is attached to an axial end in the torsion bar a problem arises with the nut on the side of bearing facing the torsion bar. This nut resides "inside" an end portion of the torsion bar or inside a portion of the link arm it is connected to and is therefore inaccessible for an assembler. For this nut to be accessible during assembly, a lateral opening in the end portion of the torsion bar or something similar is usually needed to provide a channel to the nut. Thereby, the assembler can access the nut by a tool or by hand through the lateral opening. However, such an opening would increase the cost of manufacture for the anti-roll bar and also create a potential weak area.

It is therefore the object of the present invention to overcome the problems of the known solution and to provide an improved suspension system in which the torsion bar can rotate independently from the bushing and the bolt without negative side-effects like weakening of the structure by a lateral opening in the end portion of the torsion bar.

A further object of the invention is to provide an easy and fast method for mounting such an improved suspension system.

These objects are solved by the subject-matter of the claims 1 and 6, respectively. Preferred embodiments are subject of the dependent claims 2 to 5 and 7 to 13, respectively.

The present invention provides a suspension system for attaching a driver's cabin frame to a frame of a vehicle, wherein the system comprises an anti-roll bar including a torsion bar, a bushing and means for connecting the bushing to said torsion bar, wherein said means include a bolt to be inserted through said bushing and inner securing means arranged to receive a first end portion of the bolt, characterised in that said inner securing means are arranged to have a first position relative to the bushing where the inner securing means are arranged and adapted to be attached to a first end portion of the bolt and a second position relative to the bushing where the attached inner securing means are able to rotate relative to the torsion bar and secure the bolt against a release.

In an exemplary embodiment a method for mounting such a suspension system is provided wherein the method comprises the steps of:
- inserting a first end portion of a bolt through the bushing,
- attaching the first end portion of the bolt to inner securing means arranged in a first position relative to the bushing,
- pulling the bolt outwards until the inner securing means reach a second position relative to the bushing to secure the bolt against a release, and
- mounting outer securing means such as a locking pin or an outer nut on the second end portion of the bolt to secure the bolt completely.

The attaching step of the exemplary method may be performed by a screw motion or an axial motion of the bolt depending on the embodiment of the system.

Preferably, the inventive suspension system comprises an anti-roll bar with a portion having a coaxial cavity located near the axial end of the torsion bar, e.g. a bore from an axial end of the torsion bar extending into the torsion bar along the longitudinal axis of the torsion bar. The cavity does not necessarily extend into the torsion bar but may alternatively or in addition extend into or through attachment means which are in contact with the bushing, e.g. a portion of the link arm such as a fork leg of a fork mounting.

The cavity preferably provides axial space for the inner securing means to take said first and said second position, wherein said second position is closer to the bushing than said first position. The bushing and the bolt may be arranged coaxially with respect to the torsion bar and the way between said first and said second position of the inner securing means extends along the longitudinal axis of the bolt.

In a first aspect of the inventive system the inner securing means is an inner nut which is not able to rotate relative to the torsion bar in the first position relative to the bushing in order to receive a first end portion of the bolt by a screw motion of the bolt. The inner nut comprises a threaded portion corresponding to a threaded end portion of the bolt such that the bolt can be screwed into the inner nut by a screw motion of the bolt. Furthermore, the cavity is designed such that it has a first portion with a first diameter and a second portion with a second diameter, wherein the second portion is arranged closer to the bushing than the first portion and the second diameter is larger than the first diameter. In such a cavity the inner nut is arranged in the first portion when receiving a first end portion of the bolt in the first position and arranged in the second portion of the cavity when securing the bolt against a release in the second position.

For the inner nut to be fixed against a rotation relative to the torsion bar during a screw motion of the bolt, the first portion of the cavity may be a coaxial bore with a diameter corresponding to the outer diameter of at least a portion of the inner nut such that the inner nut is in frictional contact with the wall of the first portion of the cavity to prevent a rotation of the inner nut relative to the torsion bar in the first position. The first position of the inner nut corresponds to a mounting position arranged to receive an end portion of the bolt during mounting of the system.

The second portion of the cavity may be a bore with a diameter larger than that of the first portion of the cavity such that the inner nut has no frictional contact with the wall of the second portion of the cavity to allow a rotation of the inner nut relative to the torsion bar in the second position. Thereby, the second position of the inner nut represents an operative position when the system is fully assembled and a rotation of the torsion bar relative to the bolt and the bushing is allowed.

The first embodiment of the invention has the advantage that by a simple screw motion of the bolt the inner nut located at the first position can be attached to the inserted end portion of the bolt without the need of a lateral opening through which the inner nut would have to be engaged. After attaching the inner nut to the bolt a pulling out movement of the bolt moves the inner nut into the operative second position in which it is able to rotate relative to the torsion bar and secures the bolt against a release. Outer securing means such as a locking pin or an outer nut may then be mounted on the second end portion of the bolt such that the bushing is located between the inner securing means and the outer securing means.

In another aspect said inner securing means comprises a casing and a snap element. The casing is provided with an inner cavity to receive a first end portion of the bolt, wherein the inner cavity has a first portion with a first diameter and a second portion with a second diameter, wherein the second portion is arranged closer to the bushing than the first portion and the second diameter is smaller than the first diameter. The snap element is arranged in the first portion of the inner cavity when receiving a first end portion of the bolt in the first position of the casing and arranged in the second portion of the inner cavity when securing the bolt against a release in the second position of the casing.

Preferably, the casing is arranged to rotate relative to the torsion bar. This is necessary in the operative second position but may also be the case in the first position because in the second embodiment the attaching step of the inner securing means is not performed by a screw motion of the bolt but by a simple axial motion. Therefore, in contrary to the first embodiment the inner securing means of the second embodiment do not need to be secured against a rotation relative to the torsion bar in the first position. However, it could be advantageous as can be seen in the following.

The snap element may be a locking ring which is adapted to engage a groove in the bolt. The outer diameter of the bolt fits through both portions of the inner cavity in the casing but the inner diameter of the locking ring in the casing is smaller than the outer diameter of the bolt. The locking ring may comprise an inner spring force against which an axial motion of the bolt opens the locking ring up to a larger diameter. The locking ring is secured by a wall of the first portion of the casing against an axial motion following the bolt towards the torsion bar. To facilitate the opening of the locking ring the end portion of the bolt may be tapered such that a central tip portion of the bolt is smaller than the inner diameter of the locking ring. When the circumferential groove in the bolt reaches the locking ring it snaps into the groove reducing again its diameter.

It may be important for the second embodiment of the invention that it is possible to release the bolt for dismounting of the system, because after the locking ring has snapped into the groove the bolt is secured against an unintended release.

A first possibility to allow an intended release of the bolt for dismounting is that the bolt comprises a predetermined breaking point which breaks upon a certain longitudinal pull force which may be manually applied to the bolt by a tool for instance. This predetermined breaking point may preferably be located at the groove of the bolt. A portion of the bolt at or near the groove may be thinner or comprises weaker material.

A second solution is to open up the locking ring upon rotation of the bolt. To achieve this, the depth of the groove may vary along the circumferential line around the bolt. Portions of the groove have a depth of zero, whereas other portions have a depth which is deep enough for the locking ring to snap in. The locking ring may have a shape of its inner opening corresponding to the groove profile along the circumferential line. Therefore, the locking ring has an inner opening with portions having an inner diameter corresponding to the outer diameter of the bolt and with portions having an inner diameter smaller than the outer diameter of the bolt. Those portions with an inner diameter smaller than the outer diameter of the bolt may snap into the portions of the groove which are deep enough for the locking ring to snap in. The outer shape of the locking ring is at one point engaged with the inner wall of the casing such that it is on the one hand fixed against a rotation and on the other hand able to open up to an inner diameter corresponding to the outer diameter of the bolt. There are at least two rotational positions of the bolt relative to the rotationally fixed locking ring. In the first rotational position the locking ring is able to snap into the deep parts of the groove and in the second rotational position those portions of the inner opening of the locking ring with the smallest inner diameter are positioned at those parts of the groove with a depth of zero. Therefore, the first rotational position of the bolt corresponds to a snapped-in state of the locking ring and the second rotational position of the bolt corresponds to a opened-up state of the locking ring. To allow an intended release of the bolt, it is necessary for the bolt to be rotatable relative to the locking ring. Therefore, the variation in depth between those portion of the groove with a diameter of zero and the deep portions should be gradually. "Gradually" in this sense means that the cross-sectional diameter of the bolt at the groove varies continuously along the circumferential path along the groove. In other words, regarding the diameter D of the bolt at the groove as a function of the azimuthal angle φ, the slope of the function D(φ) should be finite for all angles φ. Thereby, the locking ring may open up to release the bolt upon rotation of the bolt when the locking ring is arranged in the first portion of the inner cavity. For example the groove may be designed in such a way that a cross-sectional shape of an ellipse is obtained at the axial position of the groove. The major axis of the ellipse could correspond to the outer diameter of the bolt. The locking ring may have a shape of its inner opening corresponding to the ellipse. Such an embodiment of the groove and the locking ring would have the advantage that a 90° rotation of the bolt from the first rotational position of the bolt corresponding to a snapped-in position of the locking ring to the second rotational position of the bolt corresponding to an opened-up position of the locking ring opens up the locking ring when it is in the first portion of the casing. For this purpose the locking ring needs to be secured against rotation relative to the casing when it is in the first portion of the casing and the casing needs to be secured against rotation relative to the torsion bar when it is the first position. This can for instance be obtained by a commonly known groove and tongue arrangement extending in axial direction between the outer diameter of the locking ring and an inner wall of the first portion of the casing and between the outer wall of the casing and the first portion of the inner cavity. For the locking ring to be able to open up the groove and tongue arrangement should be located at a radial interception of the locking ring or at the radially opposite side of it.

It should be noted that not only an ellipsoidal shape would do the job but also other cross-sectional profiles allowing the snap element to open up and close upon rotation of the bolt. The rotation to open up the snap element may then take a value of degree which is appropriate.

In the second position the locking ring is secured against an opening by the smaller diameter of the second portion of the inner cavity in the casing. For dismounting of the system the bolt simply needs to be pushed towards the torsion bar such that the casing moves into the first position and the snap element moves into the first portion of the casing. Then the bolt is rotated from the first rotational position of the bolt corresponding to a snapped-in position of the locking ring to the second rotational position of the bolt corresponding to an opened-up position of the locking ring such that the locking ring opens up. The bolt may then be pulled out of the bushing because the widened locking ring can not follow into the second portion of the casing with the smaller diameter and slips off the end portion of the bolt.

For a remounting of the system a first end portion of a bolt is inserted through the bushing and the first end portion of the bolt is attached to the inner securing means arranged in a first position by a simple axial motion of the bolt towards the torsion bar. The locking ring snaps either immediately into the groove or after an adequate rotation of the bolt. Then the bolt is pulled outwards until the casing reaches a second position to secure the bolt against a release. Finally, outer securing means are mounted on the second end portion of the bolt at the side of the bushing away from the torsion bar to secure the bolt completely. These outer securing means may be a locking pin or an outer nut.

In the following preferred embodiments of the present invention are discussed in more detail with reference to the figures 1 to 14h. Figures 1 to 4 refer to disadvantageous systems known from the prior art. Figures 5 to 9 show a first preferred embodiment of the inventive system and figures 10 to 14h refer to a second preferred embodiment of the inventive system.

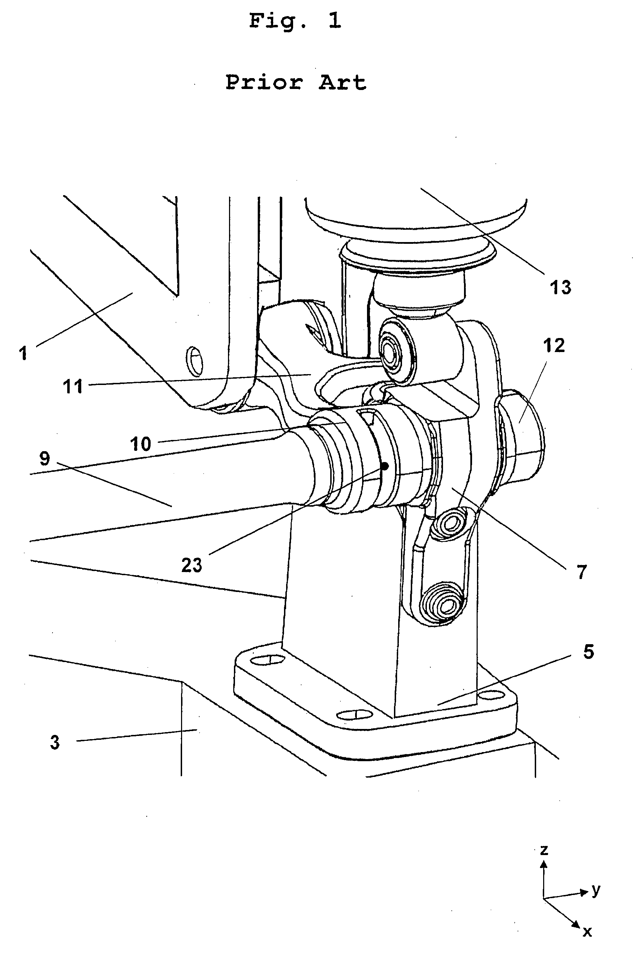

Fig. 1 shows a first perspective view on a disadvantageous systems known from the prior art.

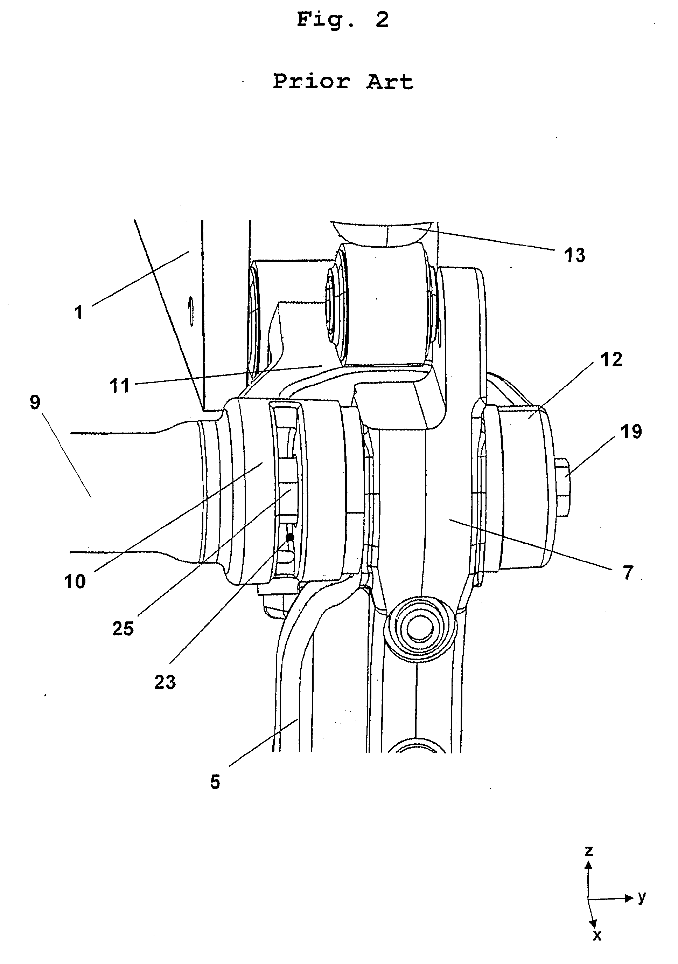

Fig. 2 shows a second perspective view on a disadvantageous systems known from the prior art.

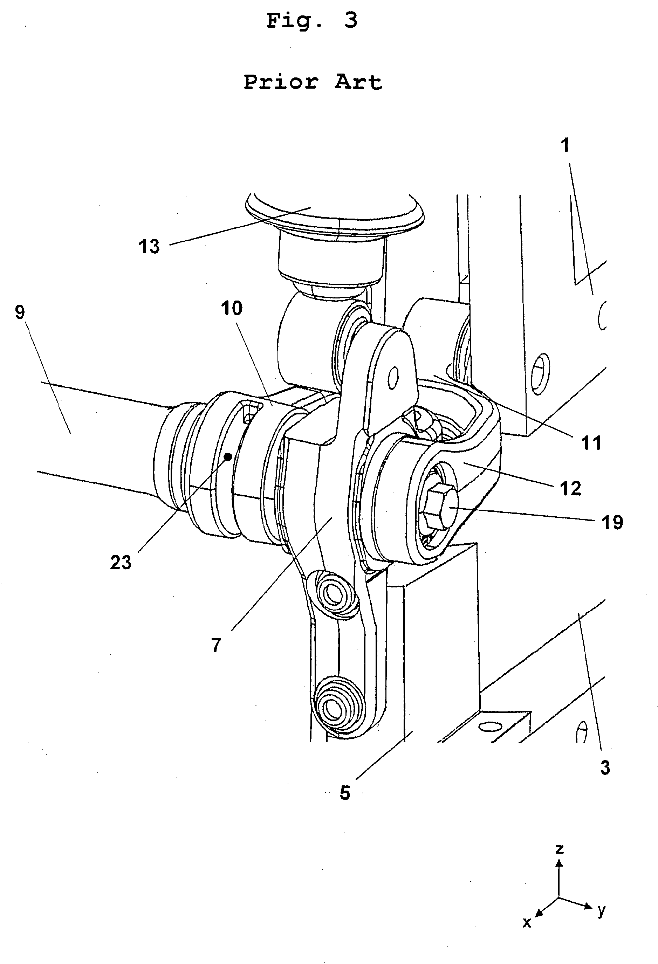

Fig. 3 shows a third perspective view on a disadvantageous systems known from the prior art.

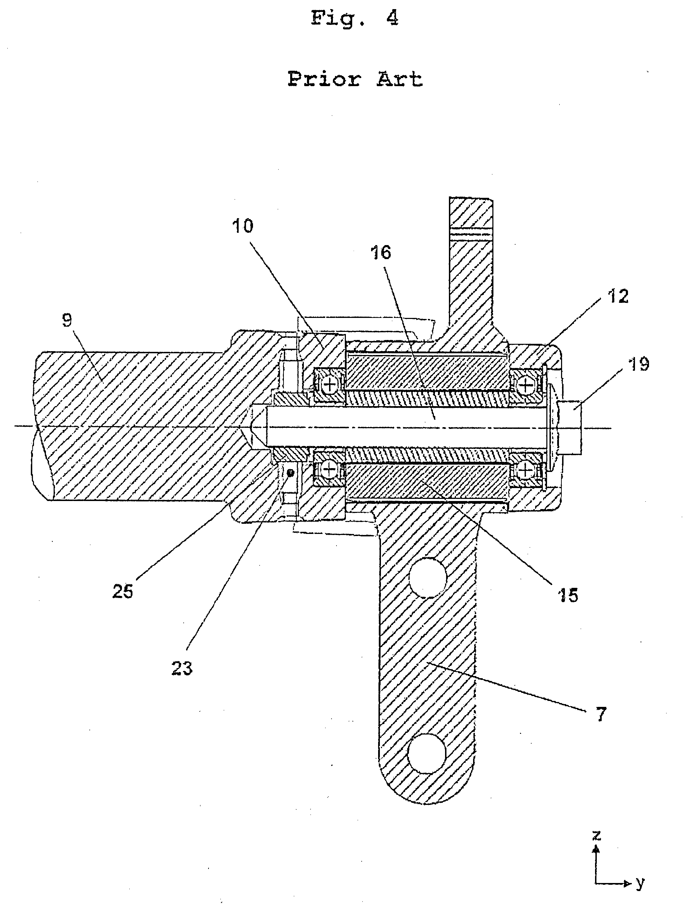

Fig. 4 shows a cross-sectional view on a disadvantageous systems known from the prior art.

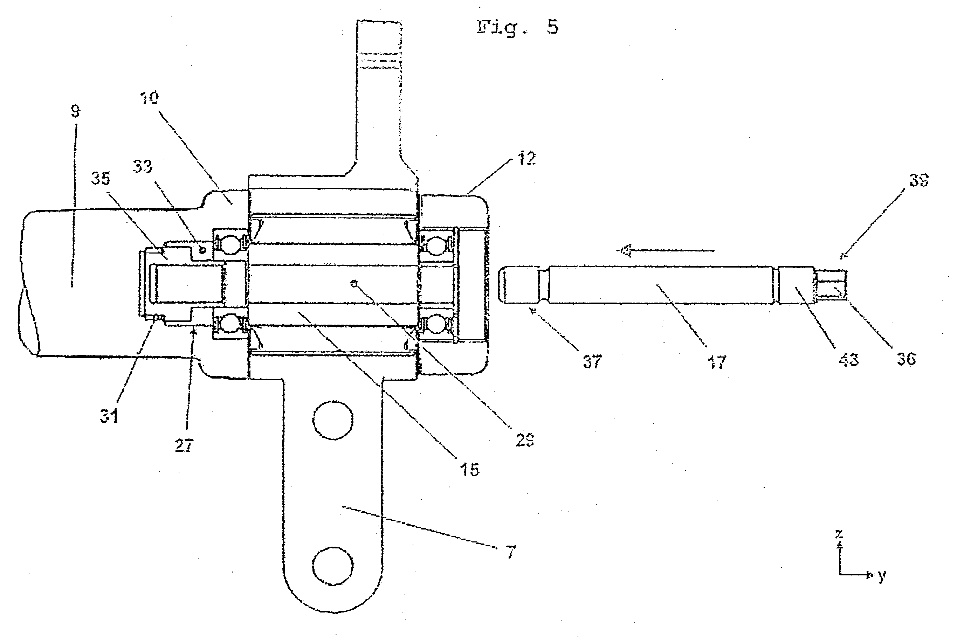

Figs. 5 to 9 show five cross-sectional views of a first preferred embodiment of the inventive system at different steps of the inventive mounting method.

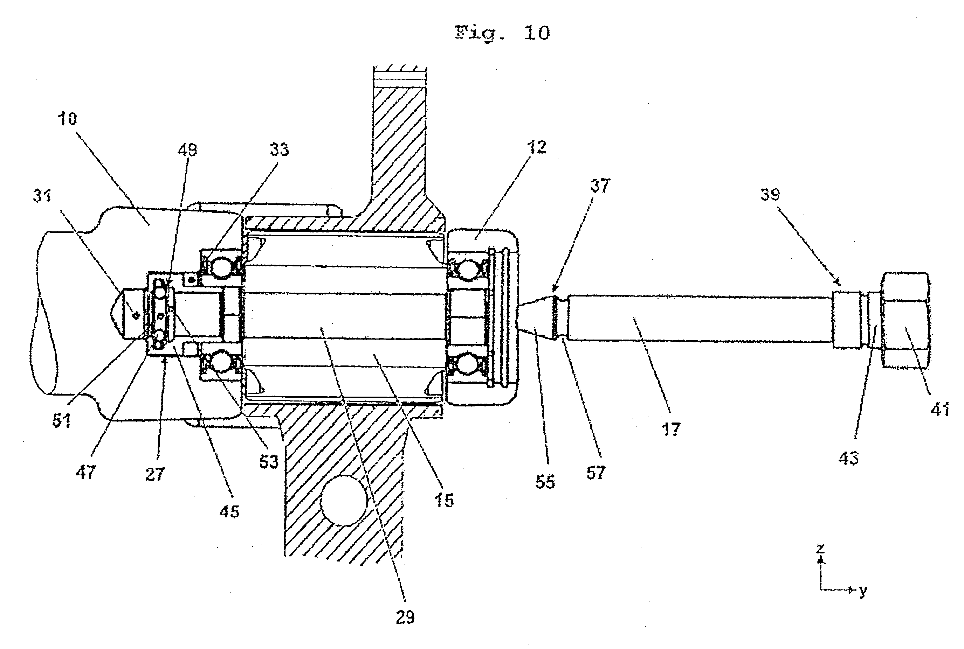

Figs. 10 to 13 show four cross-sectional views of a second preferred embodiment of the inventive system at different steps of the inventive mounting method.

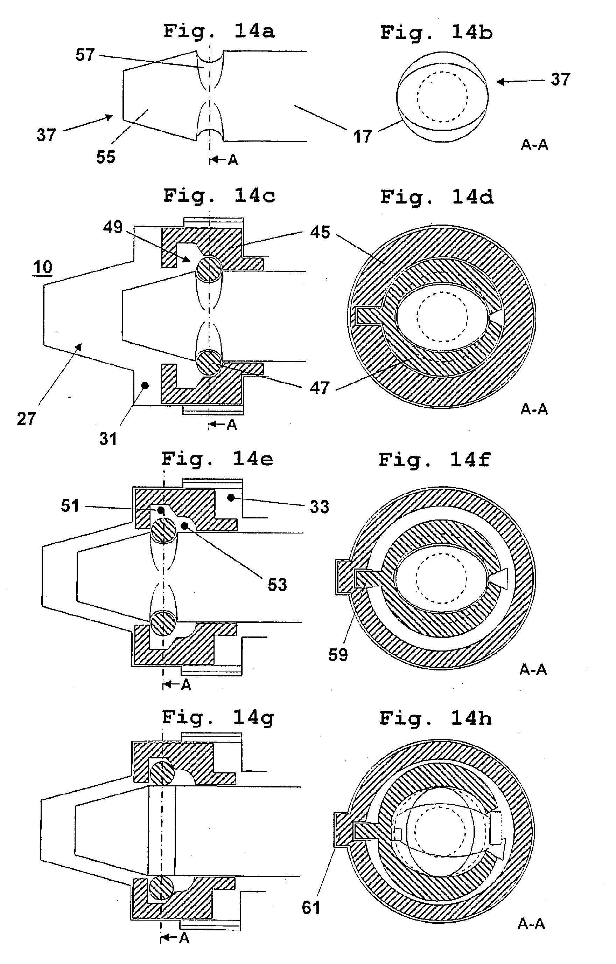

Figs. 14a to 14h show detailed longitudinal and cross-sectional views of an advantageous design of the second preferred embodiment of the inventive system.

Figures 1 to 4 show a disadvantageous system known from the prior art. The figures show a detailed view on the suspension system used for one suspension point. A driver's cabin (not shown) of a truck is spring-mounted with a cabin frame 1 to a vehicle frame 3 via a suspension member 5 which is fixed to the vehicle frame 1. The suspension member 5 extends vertically from the vehicle frame 1 comprises an upper bearing portion 7 which is adapted to receive a suspension system. The suspension system comprises an anti-roll bar including a torsion bar 9 extending transversely with respect to the driving direction from a suspension point on one side of the vehicle to another suspension point (not shown) on other side of the vehicle. At its axial end the torsion bar 9 is attached to a first fork leg 10 of a link arm 11. The link arm 11 extends longitudinally with respect to the driving direction and comprises a fork mounting with a first fork leg 10 and a second fork leg 12 which embrace the upper bearing portion 7 of the suspension member 5. The link arm 11 is rotatably connected with the fork mounting to the suspension member 5 such that a rotation of the torsion bar 9 about its longitudinal axis results in a pivotal movement of the link arm 11. The cabin frame 1 is pivotally connected to the other end of the link arm 11 which essentially performs an up-and-down movement upon a pivotal movement of the link arm 11. The cabin frame 1 is also connected to the top of the suspension member 5 via an air spring arrangement 13 which allows for a damped up-and-down movement of the cabin frame 1. Such an up-and-down movement results in a pivotal movement of the link arm 11 and a concerted rotational movement of the torsion bar 9 about its longitudinal axis. Thereby, the up-and-down movement of the suspension points connected by the torsion bar 9 is performed in a concerted manner such that heeling movements of the driver's cabin during cornering of the vehicle is reduced.

The anti-roll bar including a torsion bar 9 and the link arm 11 is rotatably connected to the bearing portion 7 of the suspension member 5 by a bearing with an inner bushing 15. The bearing is positioned between the fork legs 10, 12 of the link arm 11 and a bolt and nut principle is used to connect the anti-roll bar to the suspension member 5. An ordinary bolt 16 with a hex-head 19 is inserted along the longitudinal axis of the torsion bar 9 through openings in both fork legs 10, 12 of the link arm 11 and through the bushing 15 inside the bearing of the bearing portion 7 of the suspension member 5. The ordinary bolt 16 comprising a first end portion 21 with a threaded portion may either directly be screwed into a threaded bore in the first fork leg 10 of the link arm 11 as it is described in WO 2006/110050 or, as shown in the figures, in a counter nut 25 located in a lateral opening 23 in the first fork leg 10 of the link arm 11. The lateral opening 23 allows the assembler to engage the counter nut 25 with a tool, e.g. a standard open jaw spanner, to prevent a rotation of the counter nut 25 during mounting or dismounting of the system by a screw motion of the ordinary bolt 16.

A bolt 17 which is directly screwed in the first fork leg 10 of the link arm 11 would have the disadvantage that the torsion bar 9 can not rotate independently from the bolt 17. As the weight of the cabin weighs as least partially on the bolt 17 the bolt 17 should not rotate with the torsion bar 9 to increase stability, flexibility and to reduce the risk of loosening the bolt 17 screwed into the first fork leg 10 of the link arm 11 due to rotational movements. The other solution shown in the figures 1 to 4 is also disadvantageous because the stability of the first fork leg 10 of the link arm 11 is significantly reduced due to the lateral opening 23. Furthermore, the lateral opening 23 is expensive to manufacture.

These disadvantages are overcome by the inventive system and the inventive method for mounting the same.

Figs. 5 to 9 show five cross-sectional views of a first preferred embodiment of the inventive system at different steps of the inventive mounting method.

Fig. 5 shows a first preferred embodiment of the inventive system before the first mounting step. The bolt 17 is not yet inserted through the bushing 15. The torsion bar 9 and the fork mounting of the link arm 11 are already held in position with respect to the bearing portion 7 of the suspension member 5. A bore through the second leg 12 of the link arm 11, the bushing 15, and a cavity 27 in the first leg 10 of the link arm 11 compose an essentially cylindrical channel 29 which is coaxial with respect to the longitudinal axis of the torsion bar 9. The inner diameter of the bore through the second leg 12 of the link arm 11 and the bushing 15 essentially corresponds to the outer diameter of the bolt 17 such that the bolt 17 can be inserted into the channel 29. The cavity 27 in the first leg 10 of the link arm 11 comprises a first portion 31 with a first diameter and a second portion 33 with a second diameter. The first diameter is larger than the outer diameter of the bolt 17 and the second diameter is larger than the first diameter.

An inner securing means in form of an inner nut 35 is located in a first position inside the cavity 27. The inner nut 35 comprises a coaxial threaded portion adapted to receive a corresponding threaded portion at a first end portion 37 of the bolt 17. The first portion 31 of the cavity 27 has a diameter corresponding to the outer diameter of at least a portion of the inner nut 35 such that the inner nut 35 is in frictional contact with the wall of the first portion 31 of the cavity 27 to prevent a rotation of the inner nut 35 relative to the torsion bar 9 in the first position upon a screw motion of the bolt 17 after insertion. The inner nut 35 may be in the first position before insertion, as shown in figure 5, or it may be pushed into the first position by the bolt 17 during insertion. In the first position the inner nut 35 is not able to rotate relative to the torsion bar 9 in order to receive the first end portion 37 of the bolt 17 by a screw motion of the bolt 17.

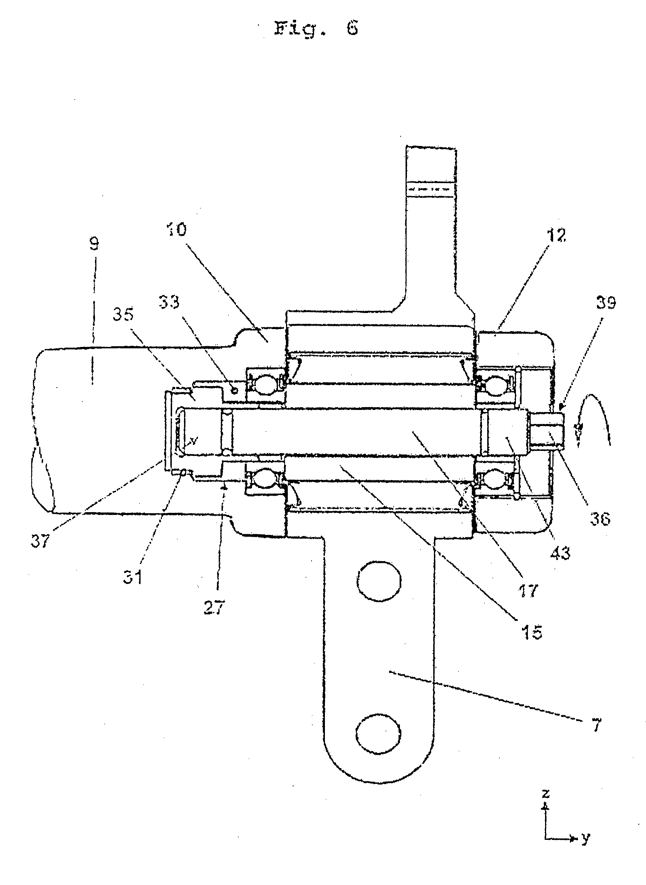

The screw motion of the bolt 17 is shown in Fig. 6 after the bolt is inserted into the channel 29. The bolt 17 is already fully screwed into the inner nut 35 by the screw motion indicated by the arrow. After insertion the second end portion 39 of the bolt 17 still sticks out of the bore in the second fork leg 12. The second end portion 39 of the bolt 17 preferably comprises an outer profile such as a hexagonal section 36 or something similar allowing the assembler to perform a screw motion of the bolt 17 using a tool such as a spanner.

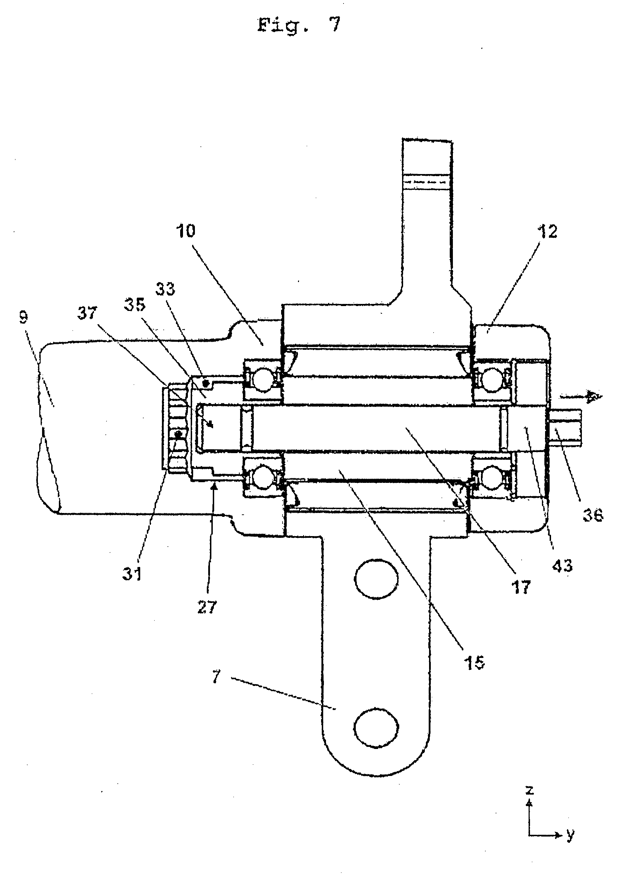

The next mounting step is shown in Fig. 7. The bolt 17 is pulled outwards such that the inner nut 35 which is now attached to the bolt 17 is pulled into the second position, i.e. into the second portion 33 of the cavity 27. In this second position the inner nut 35 is able to rotate relative to the torsion bar 9 in order to allow a rotation of the torsion bar 9 and the fork mounting of the link arm 11 relative to the bolt 17, the bushing 15 and the bearing portion 7 of the suspension member 5. As can be seen in Fig. 7 the first portion 31 of the cavity 27 comprises an inner jagged portion adapted to receive a corresponding outer jagged portion of the inner nut 35. The frictional contact between the jags prevent the inner nut 35 to rotate relative to the torsion bar 9 and the fork mounting of the link arm 11 when the inner nut 35 is in the first position. The second portion 33 of the cavity 27 does not have such a inner jagged portion but a larger diameter than the first portion 31 of the cavity 27. Thereby, the inner nut 35 is able to rotate freely inside the second portion 33 of the cavity 27, i.e. when it is the second position.

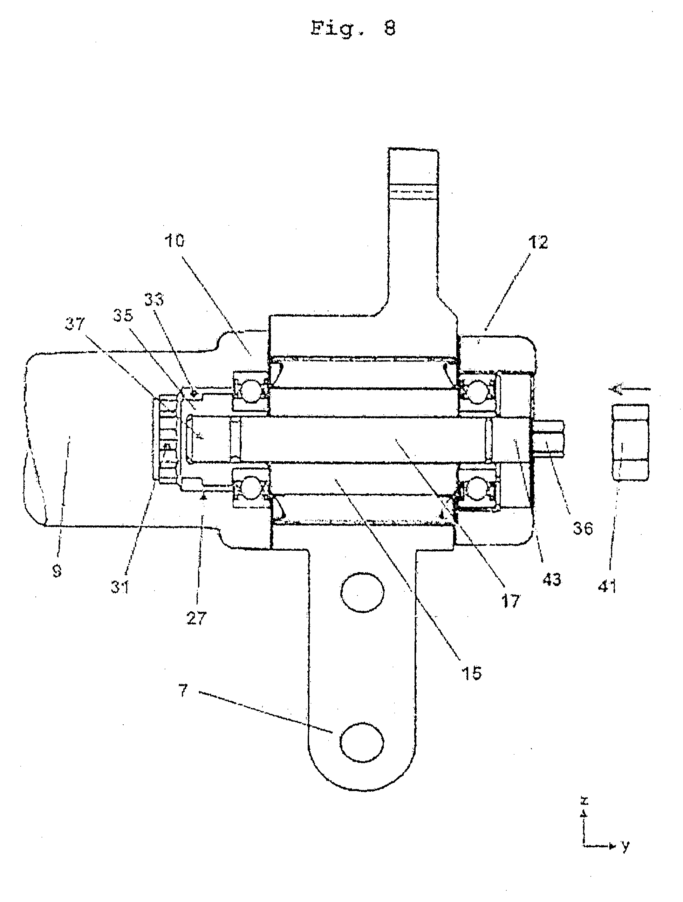

When it comes to the securing step of the bolt 17 as shown in Fig. 8 an outer securing means in form of an outer nut 41 is provided to be screwed on the second end portion 39 of the bolt 17. The hexagonal section 36 at the second end portion 39 of the bolt 17 has therefore a smaller radial extension than the outer diameter of the bolt 17. The outer nut 41 is pushed over the hexagonal section 36 and screwed onto a threaded portion 43 adjacent to the hexagonal section 36.

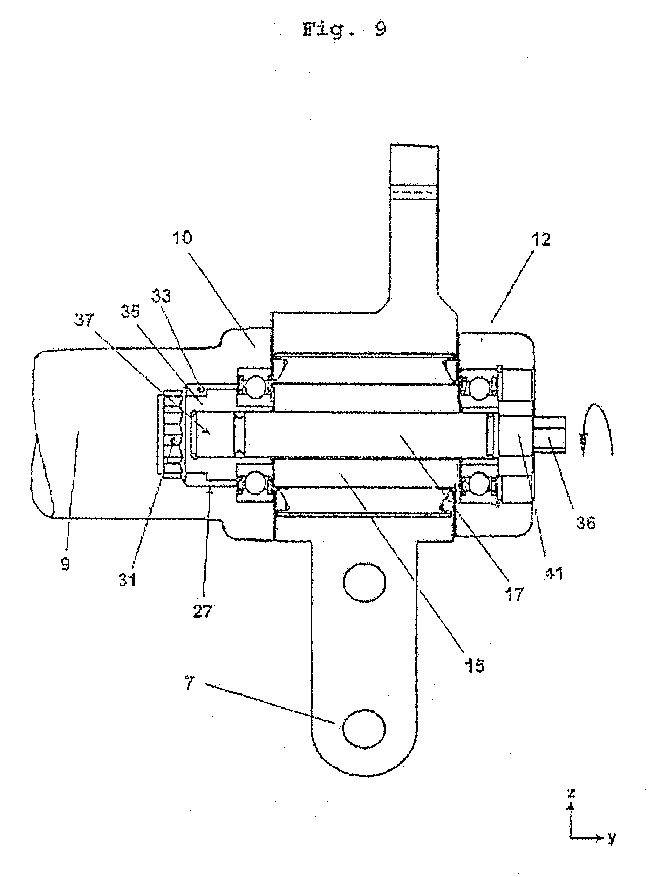

As shown in Fig. 9 the outer nut 41 secures the bolt 17 by abutment contact with the second fork leg 12 of the link arm 11. By screwing in the outer nut 41 the inner nut 35 is urged towards the bushing 15 and fixed in its second position, i.e. the operative position. As the bolt 17 and the inner nut 35 can rotate freely relative to the bushing 15 and the torsion bar 9, the bolt 17 needs to be held still temporarily by means of a tool engaging the hexagonal section 36 during screwing in of the outer nut 41. After mounting of the outer nut 41 on the second end portion 39 of the bolt 17 the anti-roll bar is securely mounted.

Figs. 10 to 13 show four cross-sectional views of a second preferred embodiment of the inventive system at different steps of the inventive mounting method.

In analogy to Fig. 5 a second preferred embodiment of the inventive system before the first mounting step is shown in Fig. 10. The second embodiment mainly differs from the first embodiment shown in Figs. 5 to 9 by the form of the bolt 17 and the embodiment of the inner securing means. Also the cavity 27 in the first fork leg 10 of the link arm 11 may have a different shape compared to the first embodiment discussed above.

In the second embodiment shown if Figs. 10 to 13 the cavity 27 in the first fork leg 10 does not comprise a first and a second portion with different diameters which represent the first and the second position for the inner securing means. The cavity 27 of the second embodiment rather comprises a first portion 31 intended to receive the first end portion 37 of the bolt 17 and a second portion 33 in which the inner securing means may take the first and the second position, respectively.

The inner securing means include a casing 45 and a snap element in form of a locking ring 47 which resides inside the casing 45. The casing itself comprises an inner cavity 49, wherein the inner cavity 49 has a first portion 51 with a first diameter and a second portion 53 with a second diameter. The second portion 53 is arranged closer to the bushing 15 than the first portion 51 and the second diameter is smaller than the first diameter. The locking ring 47 is arranged in the first portion 51 of the inner cavity 49 of the casing 45 when the casing 45 is in the first position and in the second portion 53 of the inner cavity 49 of the casing 45 when the casing 45 is in the second position. As it is shown in Fig. 10 the inner securing means, i.e. the casing 45 and the locking ring 47, should reside in the first position which is the mounting position. The locking ring 47 is located in the first portion 51 of the inner cavity 45 with the larger diameter. The outer diameter of the locking ring 47 is smaller than the diameter of the first portion 51 of the inner cavity 45 such that the locking ring 47 can radially expand in this position. The inner diameter of the locking ring 47 is smaller than the diameter of the bolt 17 and the channel 29. The first portion 31 of the cavity 27 of the first fork leg 10 of the link arm 11 has a diameter which essentially corresponds to the diameter of the bolt 17 such that the casing 45 can not enter the first portion 31 of the cavity 27 of the first fork leg 10 of the link arm 11.

The first end portion 37 of the bolt 17 has a tapering portion 55 and a circumferential groove 57 adjacent to the tapering portion 55. The form of the groove 57 is adapted to be engaged by the locking ring 47 when the bolt 17 is inserted through the channel 29 and attached to the inner securing means. An outer nut 41 is partly screwed on a treaded portion 43 of the second end portion 39 of the bolt 17.

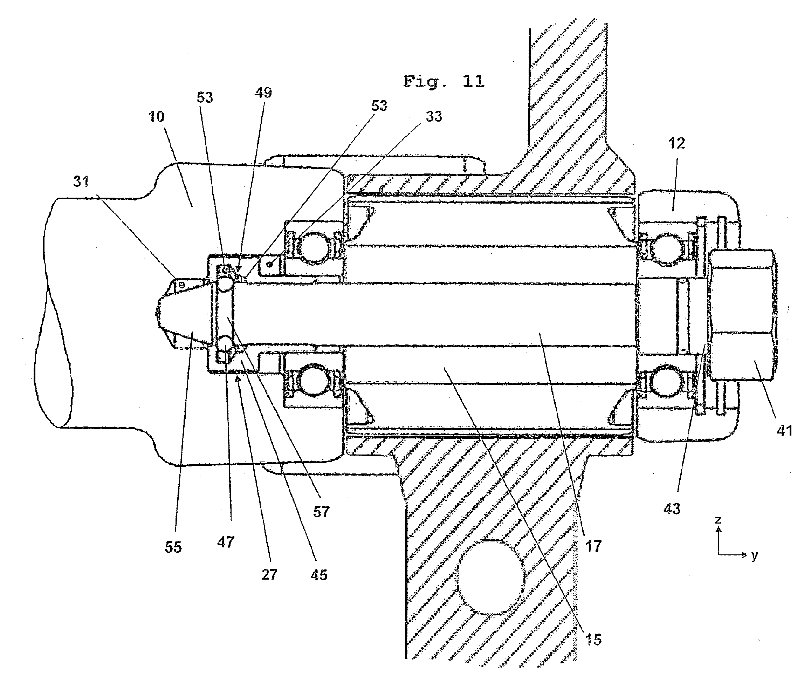

Fig. 11 shows the second embodiment after an attachment step which was performed by an axial motion of the bolt 17 through the channel 29 until the locking ring 47 has snapped into the groove 57 of the bolt 17. The first end portion 37 of the bolt 17 with the tapering portion 55 and a tip diameter smaller than the inner diameter of the locking ring 47 has opened the locking ring 47 by an axial insertion motion of the bolt 17. If the casing 45 was not in the first position before the insertion it was pushed into the first position by frictional contact between the locking ring 47 and the tapering portion 55. Once the first position is reached the locking ring 47 is widened up to the diameter of the bolt 17 such that the tapering portion 55 can protrude into the first portion 31 of the cavity 27 in the first fork leg 10 of the link arm 11. When the locking ring has snapped into the groove 57 of the bolt the inner securing means, i.e. the casing 45 and the locking ring 47, are attached to the bolt 17.

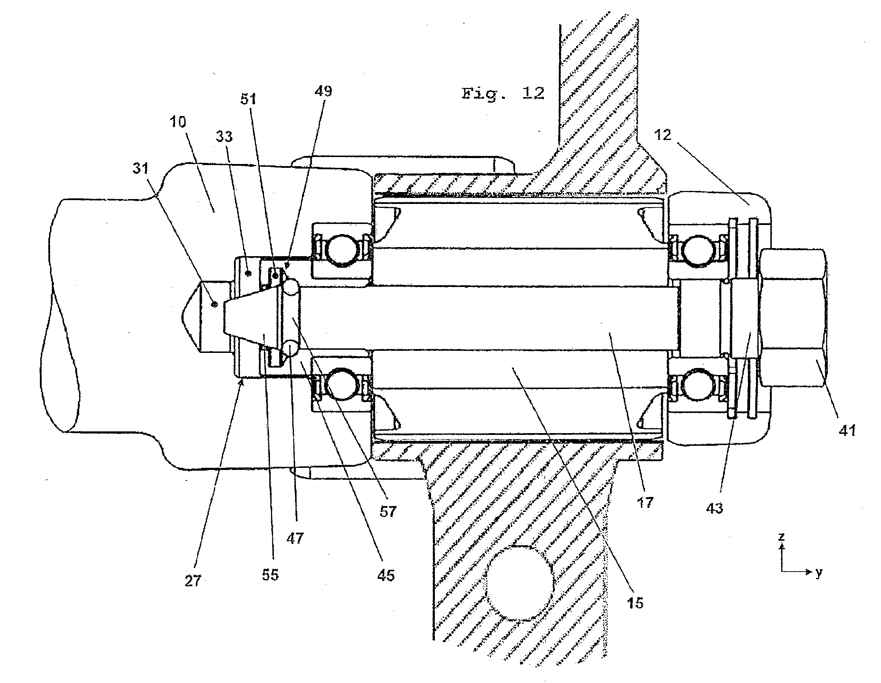

The bolt 17 can now be pulled outwards by an axial motion such that the casing 45 is pulled into the second position and the locking ring 47 is pulled into the second portion 53 of the inner cavity 49 of the casing 45 as it is shown in Fig. 12. The second portion 53 of the inner cavity 49 of the casing 45 has an inner diameter corresponding to the outer diameter of the locking ring 47 such that the locking 47 can not expand when it resides in this portion. The frictional contact between the locking ring 47 and the wall of the second portion 53 of the inner cavity 49 of the casing 45 secures the bolt against a release.

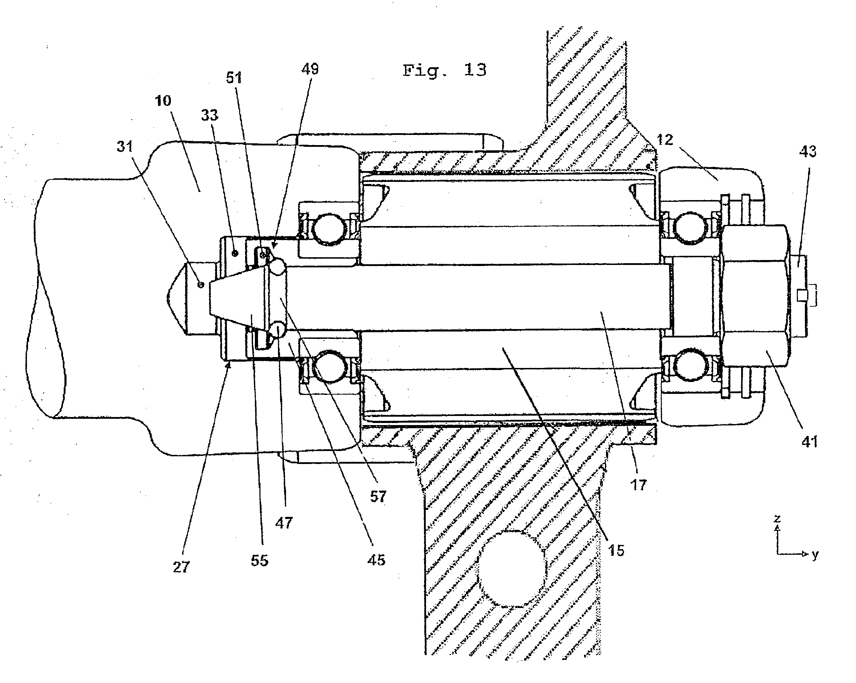

Fig. 13 shows the second embodiment after a securing step by tightening the outer nut 41. As the bolt 17 and the inner securing means, i.e. the casing 45 and the locking ring 47, can rotate freely relative to the bushing 15 and the torsion bar 9, the bolt 17 needs to be held still temporarily by means of a tool, e.g. a screw driver, engaging the slotted second end portion 39 of the bolt 17 during tightening of the outer nut 41. After mounting of the outer nut 41 on the second end portion 39 of the bolt 17 the anti-roll bar is securely mounted.

Figs. 14a to 14h show detailed longitudinal and cross-sectional views of a preferred design of the second preferred embodiment of the inventive system which is advantageous for an intended release of the bolt 17 in order to dismount the system.

A first possibility to allow an intended release of the bolt 17 for dismounting is not explicitly shown in Figs. 14a to 14h. The bolt 17 may comprise a predetermined breaking point which breaks upon a significant longitudinal pull force which may be manually applied to the bolt 17 by a tool for instance. This predetermined breaking point may preferably be located at the groove 57 of the bolt 17. The tapering portion 55 of the bolt 17 will then tear off when a significant outward pull force is applied to the bolt 17.

A second solution is shown in Figs. 14a to 14h. To achieve an opening up the locking ring 47 upon rotation of the bolt 17, the depth of the groove 57 varies along the circumferential line around the bolt 17. Portions of the groove 57 have a depth of zero, whereas other portions have a depth which is deep enough for the locking ring 47 to snap in. Figs. 14a and 14b show a groove 57 which is designed in such a way that a cross-sectional shape of an ellipse is obtained at the axial position of the groove 57. The major axis of the ellipse corresponds to the outer diameter of the bolt 17.

In Figs. 14c and 14d show the securing means in the second position, i.e. an operational position, in the cavity 27. The bolt 17 is securely fixed against an unintended release. The locking ring 47 has an inner opening with an ellipsoidal shape that corresponds to ellipse of the groove 57 in the bolt 17. In this rotational position of the bolt 17 the locking 47 is in a snapped-in position to engage the groove 17. The locking ring 47 is located in the second portion 53 of the inner cavity 49 in the casing 45. The casing 45 itself is located in the second portion 33 of the cavity 27. The locking ring 47 is unable to open up in this position as the second portion 53 of the inner cavity 49 in the casing 45 has a diameter corresponding to the outer diameter of the locking ring 47. A first groove and tongue configuration 59 prevents a rotation of the locking ring 47 relative to the casing 45. It is, however, important to note that the casing 45 is rotatable as long as it is located in the second portion 33 of the cavity 27.

Figs. 14e to 14h show the securing means in the first position, i.e. a dismounting position, in the cavity 27. The outer nut 41 at the second end 39 of the bolt 17 (not shown in Figs. 14e to 14 h) is loosened and the bolt 17 is manually pushed inwards for dismounting the system. Therefore, the locking ring 47 is pushed into the first portion 51 of the inner cavity 49 in the casing 45 and also the casing 45 itself is pushed into the first portion 31 of the cavity 27. The locking ring 47 is now able to open up in this position as the first portion 51 of the inner cavity 49 in the casing 45 has a larger diameter than the outer diameter of the locking ring 47. A second groove and tongue configuration 61 may be provided to prevent a rotation of the casing 45 relative to the cavity 27. It may also, in analogy to the first embodiment of the invention, be possible that the first portion 31 of the cavity 27 and the casing 45 have a corresponding hexagonal or similar cross-sectional shape such that a rotation of the casing 45 is not possible in this position. In order to allow a rotation when the casing 45 is located in the second portion 33 of the cavity 27, i.e. in an operating position, the second portion 33 of the cavity 27 has a circular cross-sectional shape with a larger diameter than the maximal diameter of the hexagonal or similar cross-sectional outer shape of the casing 45.

In Figs. 14e and 14f the bolt 17 is in an first rotational position in which the locking ring 47 is still in a snapped-in position engaging the groove 57 due to its inner spring force.

In Figs. 14g and 14h the bolt 17 is in an second rotational position which is 90° rotated relative to the first rotational position shown in Figs. 14e and 14f. As the locking ring 47 is located in the wider first portion 51 of the inner cavity 49 of the casing 45, the locking ring 47 is able to open up upon rotation of the bolt 17 from the first rotational position shown in Figs. 14e and 14f to the second rotational position shown in Figs. 14g and 14h. Fig. 14h illustrates the opened-up position of the locking ring 47. In this opened-up position of the locking ring 47 bolt 17 can be pulled out of the bushing 15 in order to dismount the system.

## Claims

1. Suspension system for attaching a driver's cabin frame (1) to a frame (3) of a vehicle, wherein the system comprises an anti-roll bar including a torsion bar (9), a bushing (15) and means for connecting the bushing (15) to said torsion bar (9), wherein said means include a bolt (17) to be inserted through said bushing (15) and inner securing means (35, 45) arranged to receive a first end portion (37) of the bolt (17),
**characterised in that**
said inner securing means (35, 45) are arranged to have a first position relative to the bushing (15) where the inner securing means (35, 45) are arranged and adapted to be attached to a first end portion (37) of the bolt (17) and a second position relative to the bushing (15) where the attached inner securing means (35, 45) are able to rotate relative to the torsion bar (9) and secure the bolt (17) against a release,
wherein said inner securing means is an inner nut (35) which is not able to rotate relative to the torsion bar (9) in the first position in order to receive a first end portion (37) of the bolt (17) by a screw motion of the bolt (17),
wherein the anti-roll bar comprises a cavity (27) having a first portion (31) with a first diameter and a second portion (33) with a second diameter, wherein the second portion (33) is arranged closer to the bushing (15) than the first portion (31) and the second diameter is larger than the first diameter, and
wherein the inner nut (35) is arranged in the first portion (31) of the cavity (27) when receiving a first end portion (37) of the bolt (37) in the first position and arranged in the second portion (33) of the cavity (27) when securing the bolt (27) against a release in the second position.

2. Suspension system according to claim 1, wherein the cavity (27) is located coaxially with respect to the torsion bar (9).

3. Suspension system according to claims 1 or 2, wherein the first portion (31) of the cavity (27) has a diameter corresponding to the outer diameter of at least a portion of the inner nut (35) such that the inner nut (25) is in frictional contact with the wall of the first portion (31) of the cavity (27) to prevent a rotation of the inner nut (35) relative to the torsion bar (9) in the first position.

4. Suspension system according to any one of the claims 1 to 3, wherein the second portion (33) of the cavity (27) has a diameter larger than that of the first portion (31) of the cavity (27) such that the inner nut (35) has no frictional contact with the wall of the second portion (33) of the cavity (27) to allow a rotation of the inner nut (35) relative to the torsion bar (9) in the second position.

5. Suspension system according to any one of the claims 1 to 4, wherein the first end portion (37) of the bolt (17) has a threaded portion adapted to be screwed into a corresponding threaded portion of the inner nut (35).

6. Suspension system for attaching a driver's cabin frame (1) to a frame (3) of a vehicle, wherein the system comprises an anti-roll bar including a torsion bar (9), a bushing (15) and means for connecting the bushing (15) to said torsion bar (9), wherein said means include a bolt (17) to be inserted through said bushing (15) and inner securing means (35, 45) arranged to receive a first end portion (37) of the bolt (17),
**characterised in that**
said inner securing means (35, 45) are arranged to have a first position relative to the bushing (15) where the inner securing means (35, 45) are arranged and adapted to be attached to a first end portion (37) of the bolt (17) and a second position relative to the bushing (15) where the attached inner securing means (35, 45) are able to rotate relative to the torsion bar (9) and secure the bolt (17) against a release,,
wherein said inner securing means comprise
a casing (45) with an inner cavity (49) to receive a first end portion (37) of the bolt (17), wherein the inner cavity (49) has a first portion (51) with a first diameter and a second portion (53) with a second diameter, wherein the second portion (53) is arranged closer to the bushing (15) than the first portion (51) and the second diameter is smaller than the first diameter, and
a snap element (47) arranged in the first portion (51) of the inner cavity (49) when receiving a first end portion (37) of the bolt (17) in the first position and arranged in the second portion (53) of the inner cavity (49) when securing the bolt (17) against a release in the second position.

7. Suspension system according to claim 6, wherein the casing (45) is arranged to rotate relative to the torsion bar (9).

8. Suspension system according to claim 6 or 7, wherein the snap element is a locking ring (47) adapted to engage a groove (57) in the bolt (17).

9. Suspension system according to claim 8, wherein the bolt (17) comprises a predetermined breaking point which breaks upon a certain manually applicable longitudinal pull force.

10. Suspension system according to any one of the claims 6 to 9, the depth of the groove (57) gradually varies along the circumferential line around the bolt (17) such that the locking ring (47) is able to open up for releasing the bolt (47) upon rotation of the bolt (17) when the locking ring (47) is arranged in the first portion (51) of the inner cavity (49) of the casing (45).

11. Suspension system according to any one of the preceding claims, wherein the suspension system further comprises outer securing means such as a locking pin or an outer nut (41) to be mounted on the second end portion (39) of the bolt (17) such that the bushing (15) is located between the inner securing means (35, 45) and the outer securing means.

12. Suspension system according to any of the preceding claims, wherein said second position of the inner securing means (35, 45) is closer to the bushing (15) than said first position.

13. Suspension system according to any of the preceding claims, wherein the bushing (15) and the bolt (17) are arranged coaxially with respect to the longitudinal axis of the torsion bar (9) and the way between said first and said second position of said inner securing means (35, 45) extends along the longitudinal axis of the bolt (17).

## Patentansprüche

1. Aufhängungssystem zur Anbringung eines Fahrerkabinenrahmens (1) an einem Fahrzeugrahmen (3), wobei das System einen Stabilisator einschließlich einer Torsionsstange (9), eine Muffe (15) und eine Einrichtung zum Befestigen der Muffe (15) an der Torsionsstange (9) aufweist, wobei diese Einrichtung einen durch die Muffe (15) einzusetzenden Bolzen (17) und eine innere Befestigungseinrichtung (35, 45) umfasst, die dazu ausgestaltet ist, um einen ersten Endbereich (37) des Bolzens (17) aufzunehmen,
**dadurch gekennzeichnet, dass**
die innere Befestigungseinrichtung (35, 45) dazu ausgestaltet ist, eine erste Position relativ zu der Muffe (15), in der die innere Befestigungseinrichtung (34, 45) dazu angeordnet und ausgestaltet ist, um an einem ersten Endbereich (37) des Bolzens (17) befestigt zu werden, und eine zweite Position relativ zu der Muffe (15) zu haben, in der die befestigte innere Befestigungseinrichtung (35, 45) dazu in der Lage ist, relativ zu der Torsionsstange (9) zu rotieren und den Bolzen (17) gegen eine Freigabe zu sichern,
wobei die innere Befestigungseinrichtung eine innere Mutter (35) ist, die sich in der ersten Position relativ zu der Torsionsstange (9) nicht drehen kann, um einen ersten Endbereich (37) des Bolzens (17) durch eine Schraubbewegung des Bolzens (17) aufzunehmen,
wobei der Stabilisator einen Hohlraum (27) aufweist, der einen ersten Bereich (31) mit einem ersten Durchmesser und einen zweiten Bereich (33) mit einem zweiten Durchmesser hat, wobei der zweite Bereich (33) näher an der Muffe (15) als der erste Bereich (31) angeordnet ist und wobei der zweite Durchmesser größer als der erste Durchmesser ist, und
wobei die innere Mutter (35) in dem ersten Bereich (31) des Hohlraums (27) angeordnet ist, wenn sie einen ersten Endbereich (37) des Bolzens (37) in der ersten Position aufnimmt, und in dem zweiten Bereich (33) des Hohlraums (27) angeordnet ist, wenn sie in der zweiten Position den Bolzen (27) gegen eine Freigabe sichert.

2. Aufhängungssystem nach Anspruch 1, wobei der Hohlraum (27) koaxial in Bezug auf die Torsionsstange (9) angeordnet ist.

3. Aufhängungssystem nach Ansprüchen 1 oder 2, wobei der erste Bereich (31) des Hohlraums (27) einen Durchmesser entsprechend dem äußeren Durchmesser von wenigstens einem Bereich der inneren Mutter (35) hat, so dass die innere Mutter (25) in Reibungskontakt mit der Wand des ersten Bereichs (31) des Hohlraums (27) ist, um eine Rotation der inneren Mutter (35) relativ zu der Torsionsstange (9) in der ersten Position zu verhindern.

4. Aufhängungssystem nach einem der Ansprüche 1 bis 3, wobei der zweite Bereich (33) des Hohlraums (27) einen Durchmesser hat, der größer ist als der des ersten Bereichs (31) des Hohlraums (27), so dass die innere Mutter (35) keinen Reibungskontakt mit der Wand des zweiten Bereichs (33) des Hohlraums (27) hat, um eine Drehung der inneren Mutter (35) relativ zu der Torsionsstange (9) in der zweiten Position zuzulassen.

5. Aufhängungssystem nach einem der Ansprüche 1 bis 4, wobei der erste Endbereich (37) des Bolzens (17) einen Gewindebereich hat, der dazu ausgestaltet ist, um in einen entsprechenden Gewindebereich der inneren Mutter (35) geschraubt zu werden.

6. Aufhängungssystem zum Anbringen eines Fahrerkabinenrahmens (1) an einem Fahrzeugrahmen (3), wobei das System einen Stabilisator einschließlich einer Torsionsstange (9), eine Muffe (15) und eine Einrichtung zum Befestigen der Muffe (15) an der Torsionsstange (9) aufweist, wobei die Einrichtung einen Bolzen (17) aufweist, der durch die Muffe (15) und eine innere Befestigungseinrichtung (35, 45) einzusetzen ist, die dazu ausgestaltet ist, um einen ersten Endbereich (37) des Bolzens (17) aufzunehmen,
**dadurch gekennzeichnet, dass**
die innere Befestigungseinrichtung (35, 45) dazu ausgestaltet ist, um eine erste Position relativ zu der Muffe (15), in der die innere Befestigungseinrichtung (35, 45) dazu angeordnet und ausgestaltet ist, um an einem ersten Endbereich (37) des Bolzens (17) befestigt zu werden, und eine zweite Position relativ zu der Muffe (15) zu haben, in der die angebrachten innere Befestigungseinrichtung (35, 45) in der Lage ist, relativ zu der Torsionsstange (9) zu rotieren und den Bolzen (17) gegen Freigabe zu sichern,
wobei die innere Befestigungseinrichtung aufweist
ein Gehäuse (45) mit einem inneren Hohlraum (49), um einen ersten Endbereich (37) des Bolzens (17) aufzunehmen, wobei der innere Hohlraum (49) einen ersten Bereich (51) mit einem ersten Durchmesser und einen zweiten Bereich (53) mit einem zweiten Durchmesser hat, wobei der zweite Bereich (53) näher an der Muffe (15) als der erste Bereich (51) angeordnet ist und der zweite Durchmesser kleiner als der erste Durchmesser ist, und
wobei ein Einrastelement (47) in dem ersten Bereich (51) des inneren Hohlraums (49) angeordnet ist, wenn es einen ersten Endbereich (37) des Bolzens (17) in der ersten Position aufnimmt, und in dem zweiten Bereich (53) des inneren Hohlraums (49) angeordnet ist, wenn es den Bolzen (17) in der zweiten Position gegen Freigabe sichert.

7. Aufhängungssystem nach Anspruch 6, wobei das Gehäuse (45) dazu eingerichtet ist, um relativ zu der Torsionsstange (9) zu rotieren.

8. Aufhängungssystem nach Anspruch 6 oder 7, wobei das Einrastelement ein Verschlussring (47) ist, der dazu ausgestaltet ist, um in eine Nut (57) in dem Bolzen (17) einzugreifen.

9. Aufhängungssystem nach Anspruch 8, wobei der Bolzen (17) eine Sollbruchstelle aufweist, die bei Anwendung einer gewissen manuellen Zugkraft in Längsrichtung bricht.

10. Aufhängungssystem nach einem der Ansprüche 6 bis 9, wobei die Tiefe der Nut (57) graduell entlang der Umfangslinie um den Bolzen (17) variiert, so dass der Verschlussring (47) dazu in der Lage ist, sich auf Drehung des Bolzens (17) hin zu öffnen, um den Bolzen (47) freizugeben, wenn der Verschlussring (47) in dem ersten Bereich (51) des inneren Hohlraums (49) des Gehäuses (45) angeordnet ist.

11. Aufhängungssystem nach einem der vorhergehenden Ansprüche, wobei das Aufhängungssystem weiter eine äußere Befestigungseinrichtung, wie etwa einen Verschlussstift oder eine äußere Mutter (41) aufweist, die am zweiten Endbereich (39) des Bolzens (17) anzubringen ist, so dass die Muffe (15) zwischen der inneren Befestigungseinrichtung (35, 45) und der äußeren Befestigungseinrichtung angeordnet ist.

12. Aufhängungssystem nach einem der vorhergehenden Ansprüche, wobei die zweite Position der inneren Befestigungseinrichtung (35, 45) näher an der Muffe (15) als die erste Position ist.

13. Aufhängungssystem nach einem der vorhergehenden Ansprüche, wobei die Muffe (15) und der Bolzen (17) koaxial in Bezug auf die Längsachse der Torsionsstange (9) angeordnet sind und wobei der Weg zwischen der ersten und der zweiten Position der inneren Befestigungseinrichtung (35, 45) entlang der Längsachse des Bolzens (17) verläuft.

## Revendications

1. Système de suspension servant à fixer un cadre (1) de cabine de conduite à un cadre (3) d'un véhicule, le système comprenant une barre anti-roulis comprenant une barre de torsion (9), une bague (15) et des moyens de raccordement de la bague (15) à ladite barre de torsion (9), lesdits moyens comprenant un boulon (17) destiné à être inséré à travers ladite bague (15) et des moyens d'assujettissement intérieurs (35, 45) configurés pour recevoir une première partie d'extrémité (37) du boulon (17),
**caractérisé en ce que**
lesdits moyens d'assujettissement intérieurs (35, 45) sont configurés pour avoir une première position par rapport à la bague (15) dans laquelle les moyens d'assujettissement intérieurs (35, 45) sont disposés et conçus pour être fixés à une première partie d'extrémité (37) du boulon (17) et une seconde position par rapport à la bague (15) dans laquelle les moyens d'assujettissement intérieurs (35, 45) fixés ont la capacité de tourner par rapport à la barre de torsion (9) et d'assujettir le boulon (17) de sorte qu'il ne puisse être libéré,
lesdits moyens d'assujettissement intérieurs étant constitués d'un écrou intérieur (35) qui n'a pas la capacité de tourner par rapport à la barre de torsion (9) dans la première position afin de recevoir une première partie d'extrémité (37) du boulon (17) par le biais d'un mouvement de vissage du boulon (17),
la barre anti-roulis comprenant une cavité (27) comportant une première partie (31) présentant un premier diamètre et une seconde partie (33) présentant un second diamètre, la seconde partie (33) étant disposée plus près de la bague (15) que la première partie (31) et le second diamètre étant supérieur au premier diamètre, et
l'écrou intérieur (35) étant disposé dans la première partie (31) de la cavité (27) lorsqu'il reçoit une première partie d'extrémité (37) du boulon (17) dans la première position et disposé dans la seconde partie (33) de la cavité (27) lorsqu'il assujettit le boulon (17) de sorte qu'il ne puisse être libéré dans la seconde position.

2. Système de suspension selon la revendication 1, dans lequel la cavité (27) est positionnée de manière coaxiale par rapport à la barre de torsion (9).

3. Système de suspension selon la revendication 1 ou 2, dans lequel la première partie (31) de la cavité (27) présente un diamètre correspondant au diamètre extérieur d'au moins une partie de l'écrou intérieur (35) de telle sorte que l'écrou intérieur (35) se trouve en contact de frottement avec la paroi de la première partie (31) de la cavité (27) afin d'empêcher une rotation de l'écrou intérieur (35) par rapport à la barre de torsion (9) dans la première position.

4. Système de suspension selon l'une quelconque des revendications 1. à 3, dans lequel la seconde partie (33) de la cavité (27) présente un diamètre supérieur à celui de la première partie (31) de la cavité (27) de telle sorte que l'écrou intérieur (35) ne se trouve pas en contact de frottement avec la paroi de la seconde partie (33) de la cavité (27) afin de permettre une rotation de l'écrou intérieur (35) par rapport à la barre de torsion (9) dans la seconde position.

5. Système de suspension selon l'une quelconque des revendications 1 à 4, dans lequel la première partie d'extrémité (37) du boulon (17) comporte une partie filetée conçue pour être vissée dans une partie taraudée correspondante de l'écrou intérieur (35).

6. Système de suspension servant à fixer un cadre (1) de cabine de conduite à un cadre (3) d'un véhicule, le système comprenant une barre anti-roulis comprenant une barre de torsion (9), une bague (15) et des moyens de raccordement de la bague (15) à ladite barre de torsion (9), lesdits moyens comprenant un boulon (17) destiné à être inséré à travers ladite bague (15) et des moyens d'assujettissement intérieurs (35, 45) configurés pour recevoir une première partie d'extrémité (37) du boulon (17),
**caractérisé en ce que**
lesdits moyens d'assujettissement intérieurs (35, 45) sont configurés pour avoir une première position par rapport à la bague (15) dans laquelle les moyens d'assujettissement intérieurs (35, 45) sont disposés et conçus pour être fixés à une première partie d'extrémité (37) du boulon (17) et une seconde position par rapport à la bague (15) dans laquelle les moyens d'assujettissement intérieurs (35, 45) fixés ont la capacité de tourner par rapport à la barre de torsion (9) et d'assujettir le boulon (17) de sorte qu'il ne puisse être libéré,
lesdits moyens d'assujettissement intérieurs comprenant
un corps (45) comportant une cavité intérieure (49) destinée à recevoir une première partie d'extrémité (37) du boulon (17), la cavité intérieure (49) comportant une première partie (51) présentant un premier diamètre et une seconde partie (53) présentant un second diamètre, la seconde partie (53) étant disposée plus près de la bague (15) que la première partie (51) et le second diamètre étant inférieur au premier diamètre, et
un élément d'encliquetage (47) disposé dans la première partie (51) de la cavité intérieure (49) lorsqu'elle reçoit une première partie d'extrémité (37) du boulon (17) dans la première position et disposé dans la seconde partie (53) de la cavité intérieure (49) lorsqu'elle assujettit le boulon (17) de sorte qu'il ne puisse être libéré dans la seconde position.

7. Système de suspension selon la revendication 6, dans lequel le corps (45) est configuré pour tourner par rapport à la barre de torsion (9).

8. Système de suspension selon la revendication 6 ou 7, dans lequel l'élément d'encliquetage est un anneau de blocage (47) conçu pour venir en prise avec une rainure (57) formée dans le boulon (17).

9. Système de suspension selon la revendication 8, dans lequel le boulon (17) comprend un point de rupture prédéterminé qui se rompt en cas d'application d'une certaine force de traction longitudinale applicable manuellement.

10. Système de suspension selon l'une quelconque des revendications 6 à 9, dans lequel la profondeur de la rainure (57) varie graduellement le long de la ligne circonférentielle autour du boulon (17) de telle sorte que l'anneau de blocage (47) ait la capacité de s'ouvrir afin de libérer le boulon (17) lors d'une rotation du boulon (17) lorsque l'anneau de blocage (47) est disposé dans la première partie (51) de la cavité intérieure (49) du corps (45).

11. Système de suspension selon l'une quelconque des revendications précédentes, comprenant en outre des moyens d'assujettissement extérieurs tels qu'une goupille de blocage ou un écrou extérieur (41) à installer sur la seconde partie d'extrémité (39) du boulon (17) de telle sorte que la bague (15) soit située entre les moyens d'assujettissement intérieurs (35, 45) et les moyens d'assujettissement extérieurs.

12. Système de suspension selon l'une quelconque des revendications précédentes, dans lequel ladite seconde position des moyens d'assujettissement intérieurs (35, 45) est plus proche de la bague (15) que ladite première position.

13. Système de suspension selon l'une quelconque des revendications précédentes, dans lequel la bague (15) et le boulon (17) sont placés de manière coaxiale par rapport à l'axe longitudinal de la barre de torsion (9) et la trajectoire entre lesdites première et seconde positions desdits moyens d'assujettissement intérieurs (35, 45) s'étend le long de l'axe longitudinal du boulon (17).
